Europäisches Patentamt

European Patent Office

Office européen des brevets

(19)

(11) Veröffentlichungsnummer: **0 114 994**
**A2**

# (12) EUROPÄISCHE PATENTANMELDUNG

(21) Anmeldenummer: **83112600.8**

(22) Anmeldetag: **15.12.83**

(51) Int. Cl.³: **B 60 C 15/06**

(30) Priorität: **28.01.83 DE 3302867**

(43) Veröffentlichungstag der Anmeldung:
**08.08.84 Patentblatt 84/32**

(84) Benannte Vertragsstaaten:
**AT BE CH DE FR GB IT LI LU NL SE**

(71) Anmelder: **Continental Gummi-Werke**
**Aktiengesellschaft**
**Königsworther Platz 1**
**D-3000 Hannover 1(DE)**

(72) Erfinder: **Mahling, Rolf, Dipl.-Chem.**
**Leipziger Strasse 18**
**D-3540 Korbach(DE)**

(72) Erfinder: **Klapp, Wolfgang**
**Wilhelmine-Rüdiger-Strasse 21**
**D-3540 Korbach(DE)**

(54) Fahrzeugrad.

(57) Die Erfindung bezieht sich auf ein bereiftes Fahrzeugrad mit einer Felge und mit einem Reifen aus Gummi oder gummiähnlichen Kunststoffen, der im Bereich der Anlageflächen an der Felge je ein Wulstschutzband aufweist. Zur Vermeidung von Beschädigungen des Reifens im Wulstbereich wird vorgeschlagen, daß das Wulstschutzband aus einem Faser - Gummi - Gemisch besteht.

Fig. 2

EP 0 114 994 A2

Croydon Printing Company Ltd

Fahrzeugrad

Beschreibung

Die Erfindung betrifft ein bereiftes Fahrzeugrad mit einer Felge und mit einem Reifen aus Gummi oder gummiähnlichen Kunststoffen, der im Bereich der Anlageflächen an der Felge je ein Wulstschutzband aufweist.

Es ist bekannt, bei Fahrzeugluftreifen ein Wulstschutzband vorzusehen, das aus einem gummierten Gewebestreifen besteht, der bis oberhalb des Felgenhorns reicht und um den Reifenwulst herumgeführt ist. Das Wulstschutzband hat die Aufgabe, den Reifen bei der Montage und beim Betrieb auf der Felge vor Beschädigungen zu schützen.

Es hat sich gezeigt, daß bei den Reifen von Fahrzeugrädern mit hoher Belastung, z.B. bei den sogenannten Industriereifen, das Wulstschutzband vor allem im Bereich der Felgenhörner aufgrund des Scheuerns zwischen Reifen und Felge vorzeitig beschädigt oder sogar zerstört wird, was sich in Gewebebrüchen äußern kann.

Der Erfindung liegt deshalb die Aufgabe zugrunde, bei Reifen der eingangs genannten Art die Wulstschutzbänder derart zu verbessern, daß die geschilderten Beschädigungen bzw. Zerstörungen nicht mehr auftreten.

Diese Aufgabe wird erfindungsgemäß dadurch gelöst, daß das Wulstschutzband ein Faser - Gummi - Gemisch enthält, bei dem die Fasern festhaftend im Gummi eingebettet sind.

Mit der Erfindung wird im Bereich der Wülste eine wesentlich erhöhte Reifenhaltbarkeit erzielt. Das erfindungsgemäße Wulstschutzband kann sowohl in Verbindung mit einem üblichen Gewebestreifen als auch ohne einen solchen ausgebildet sein. Wichtig ist, daß es in dem durch Scheuern am meisten beanspruchten Bereich am Felgenhorn vorhanden ist, es kann sich jedoch über den gesamten Bereich der Anlageflächen des Reifens an der Felge erstrecken, d.h. auch die Wulstsitzflächen bedecken.

Gemäß einer bevorzugten Ausführungsart sind die 1 bis 5 mm langen Fasern aus Reyon und/oder Nylon überwiegend in Reifenumfangsrichtung orientiert, so daß der Flächenanteil der Fasern an der Grenzfläche zum Felgenhorn möglichst groß wird.

Der Faseranteil des Faser-Gummi-Gemisches kann zwischen 15 und 35 Vol. % liegen.

Vorteilhafte Ausgestaltungen der Erfindung sind den Unteransprüchen zu entnehmen.

Nachfolgend wird ein Ausführungsbeispiel der Erfindung beschrieben und in einer Zeichnung dargestellt.

Es zeigt

Fig. 1 ein luftbereiftes Fahrzeugrad mit einem Wulstschutzband in einem radialen Teilschnitt,

Fig. 2 das Rad nach Fig. 1 in einem vergrößerten Ausschnitt des Wulstbereiches.

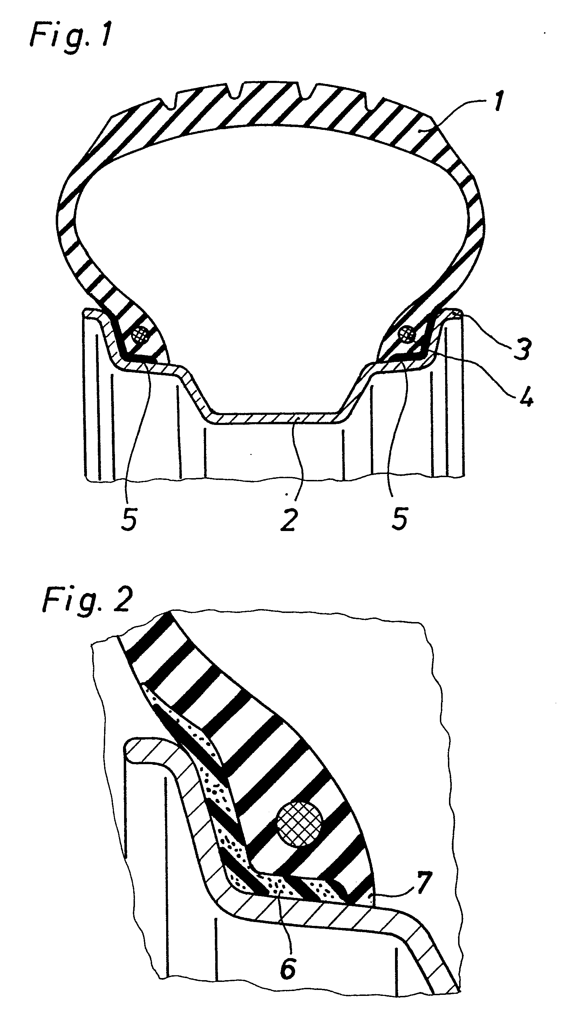

Das Rad nach Fig. 1 besteht aus einem Reifen 1 aus Gummi oder gummiähnlichen Kunststoffen und einer Felge 2 mit zwei seitlich außen gelegenen Felgenhörnern 3, die den Reifen 1 gegen ein seitliches Abrutschen von der Felge 2 sichern. Der Reifen 1 weist in den Wülsten zugfeste Wulstkerne 4 auf, in denen eine Radial- oder eine Diagonalkarkasse verankert sein kann.

Zumindest im seitlich äußeren Wulstbereich des Reifens 1, d.h. im an den Felgenhörnern 3 anliegenden Bereich befindet sich ein Wulstschutzband aus einem Faser-Gummi-Gemisch, bei dem die Fasern 6 festhaftend im Gummi eingebettet sind. Unterhalb der Wulstkerne 4 deckt das Wulstschutzband 5 den größten Teil der Wulstsitzflächen ab, lediglich axial innen ist in dem dargestellten Beispiel eine Dichtlippe 7 aus weicherem Gummi belassen worden.

Es hat sich jedoch gezeigt, daß das Wulstschutzband 5 aus dem Faser-Gummi-Gemisch für sich bereits einen luftdichten Sitz des Reifens 1 an der Felge 2 gewährleistet, so daß gegebenenfalls auf die Dichtlippe 7 verzichtet werden kann. Da ein Scheuern zwischen Reifen 1 und Felge 2 hauptsächlich im Bereich der Felgenhörner 3 stattfindet, während der Bereich unterhalb der Wulstkerne 4 in einer relativ ruhigen Zone liegt, kann es ausreichen, das Wulstschutzband 5 bereits am radial inneren Ende der Felgenhörner 3 enden zu lassen. Radial außen sollte das Wulstschutzband 5 sich etwas über die unmittelbare Anlagefläche des Reifens 1 am Felgenhorn 3 erstrecken, so daß es auch die äußeren Reifenteile abdeckt, die beim Einfedern des Reifens 1 mit dem Felgenhorn 3 in Berührung kommen. Das Wulstschutzband 5 kann bei Bedarf auf der den Wulstkernen 4 zugewandten Seite zusätzlich einen Gewebestreifen aufweisen.

Es haben sich Wulstschutzbanddicken von 0,8 bis 1,6 mm bewährt.

Der Faseranteil des Faser-Gummi-Gemisches kann 15 bis 35 Vol. % betragen, und die Fasern 6 sind mittels eines Haftungssystems z.B. aus Resorcin und Hexamethylentetramin eingebettet. Eine bevorzugte Mischung für das Wulstschutzband 5 setzt sich folgendermaßen zusammen:

| Naturkautschuk | 45 Vol. % |
|---|---|
| Fasern | 25 " |
| Ruß | 15 " |
| Mineralöl | 6 " |

| Verarbeitungshilfe | 3 Vol. % |
| Stearinsäure | 1 " |
| Zinkweiß | 1 " |
| Resorcin | 1 " |
| Alterungsschutzmittel | 1 " |
| Beschleuniger (incl. Hexamethylentetramin) | 2 " |
| | 100 Vol. % |

Die Mischung für das Wulstschutzband 5 sollte eine Härte von mehr als 80 Shore A, bevorzugt mehr als 85 Shore A aufweisen, so daß das Wulstschutzband 5 sehr bewegungsarm an der Felge anliegt. Dadurch wird die Wärmeentwicklung in diesem Bereich des Reifens 1 reduziert. Für die Fasern 6, die aus Nylon oder Reyon bestehen, jedoch auch metallischer Natur sein können, haben sich Längen zwischen 1 und 5 mm bewährt. Das Verhältnis von Faserlänge zu -durchmesser sollte mindestens 20 betragen.

Besonders günstig ist es, wenn das Wulstschutzband 5 als Kalanderplatte hergestellt wird, weil die Fasern 6 beim Kalandrieren eine bevorzugte Orientierung in Längsrichtung erfahren, so daß sie nach dem Auflegen des Wulstschutzbandes 5 auf den Reifenrohling überwiegend in Umfangsrichtung orientiert sind. Damit wird aber der Flächenanteil der Fasern 6 an der Anlagefläche des Wulstschutzbandes 5 am Felgenhorn 3 erhöht, und das Scheuern des Reifens 1 an der Felge 2 wird von den äußerst strapazierfähigen Fasern 6 aufgenommen.

Es sollte angemerkt werden, daß die Erfindung sowohl bei Radialals auch bei Diagonalreifen anwendbar ist. Sie ist einsetzbar bei LKW-, PKW-, Motorrad- und Fahrradreifen, und sie bringt sogar Vorteile bei Vollgummireifen, die auf einer Felge für Luftreifen montiert werden.

Hannover, den 6. Januar 1983
Sr/Fr          83-4 P/Sr

Ansprüche

1. Bereiftes Fahrzeugrad mit einer Felge und mit einem Reifen aus Gummi oder gummiähnlichen Kunststoffen, der im Bereich der Anlageflächen an der Felge je ein Wulstschutzband aufweist, dadurch gekennzeichnet, daß das Wulstschutzband (5) ein Faser - Gummi - Gemisch enthält, bei dem die Fasern (6) festhaftend im Gummi eingebettet sind.

2. Fahrzeugrad nach Anspruch 1, dadurch gekennzeichnet, daß das Wulstschutzband (5) ausschließlich aus dem Faser - Gummi - Gemisch besteht.

3. Fahrzeugrad nach Anspruch 1, dadurch gekennzeichnet, daß das Faser - Gummi - Gemisch einen Faseranteil von 15 bis 35 Vol. % aufweist.

4. Fahrzeugrad nach Anspruch 1, dadurch gekennzeichnet, daß das Faser - Gummi - Gemisch eine Härte von ca. 80 Shore oder mehr aufweist.

5. Fahrzeugrad nach Anspruch 1, dadurch gekennzeichnet, daß die Dicke des Wulstschutzbandes (5) 0,8 bis 1,6 mm beträgt.

6. Fahrzeugrad nach Anspruch 1, dadurch gekennzeichnet, daß die Fasern (6) des Wulstschutzbandes (5) aus synthetischem Material, insbesondere aus Reyon und/oder Nylon bestehen.

7. Fahrzeugrad nach Anspruch 1, gekennzeichnet durch metallische Fasern (6).

8. Fahrzeugrad nach Anspruch 1, gekennzeichnet durch Fasern (6) von 1 bis 5 mm Länge.

9. Fahrzeugrad nach Anspruch 1, gekennzeichnet durch Fasern (6) mit einem Verhältnis Länge : Durchmesser von mindestens 20.

10. Fahrzeugrad nach Anspruch 1, dadurch gekennzeichnet, daß die Fasern (6) bevorzugt in Reifenumfangsrichtung orientiert sind.

01 14994

**Fig. 1**

**Fig. 2**